# EUROPEAN PATENT SPECIFICATION

(11) **EP 2 286 129 B1**
(45) Date of publication and mention of the grant of the patent: **01.01.2014**
(21) Application number: 09742916.1
(22) Date of filing: 29.04.2009
(51) Int. Cl.: F16L 1/20, B28B 7/04

(54) **CONCRETE ELEMENT FOR PROTECTING AN UNDERWATER INSTALLATION**
BETONELEMENT FÜR DEN SCHUTZ EINER UNTERWASSERINSTALLATION
ÉLÉMENT DE BÉTON (1) DESTINÉ À PROTÉGER UNE INSTALLATION SOUS-MARINE

(30) Priority: 06.05.2008 SE 0800999; 06.05.2008 SE 0800134; 06.05.2008 SE 0800135
(43) Date of publication of application: 23.02.2011
(73) Proprietor: Helgesson, Björn, 45493 Brastad (SE); Meisingset, Sverre, 3173 Vear (NO)
(72) Inventor: Helgesson, Björn, 45493 Brastad (SE); Meisingset, Sverre, 3173 Vear (NO)
(74) Representative: Bergquist, Kjell Gunnar
(86) International application number: PCT/SE2009/000220
(87) International publication number: WO 2009/136834

(56) References cited:
- WO-A1-79/00109
- WO-A1-2005/078325
- WO-A1-2008/083835
- GB-A- 1 585 170
- GB-A- 2 242 251
- GB-A- 2 345 198
- JP-A- 2004 166 434
- US-A- 4 242 010
- US-A- 4 683 156
- US-A- 4 790 508
- US-A- 5 549 417
- US-A1- 2003 137 081

## Description

### TECHNICAL FIELD

The present invention relates to a concrete element for protecting an underwater installation, such as a cable or pipeline. The invention also relates to a mould and a method for manufacturing such concrete elements. Furthermore, the invention relates to an arrangement and a method for laying concrete elements from a ship.

### BACKGROUND OF THE INVENTION

Underwater installations, such as cables and pipelines without any overlying protection, are at great risk of being damaged or displaced out of position by sea currents, or fishing implements, e.g. trawls, which are dragged over them. Accordingly, it has become more and more common to cover underwater installations with suitably designed protective elements, which are laid in a long row over the underwater installation. The protective elements are advantageously laid at the same time as the underwater installation itself.

Different types of protective elements for underwater installations are previously known. Examples of previously known types of such protective elements are described in the patent publications WO 2005/078325 A1, US 6 349 808 B1 and US 4 242 010.

Another protective element is described in GB2345198, where a cable is protected by being placed in a grove, open to the top.
A mould and a method to produce curved concrete shells is presented in WO2008/083835. The mould has cover shells that can be opened. Before curing the concrete, the mould is turned to remove air bubbles from the top surface of the shell.

Some of the previously known protective structures have to be covered with gravel or sand or bottom sediment, in order to provide sufficient stability and protection for the underwater installation. This requires more working steps and larger material consumption, and increases the cost of the protective structure. Furthermore, underwater digging and filling operations often often result in a loose bottom structure, which is susceptible to influence from sea currents and to be washed away.

Elements of reinforced concrete are advantageous with respect to stability and protecting ability, and generally do not require any covering with gravel or the like. However, the previously known concrete elements have certain disadvantages. Such a disadvantage is that concrete elements with a larger length than about a metre will produce a row with a relatively large radius of curvature, for downward deflection of the row, during the laying operation, and thus require the use of lifting cranes or hoisting devices which are relatively high, or at least placed high up, in order not to cause the laying operation to become very inexact due to an excessively large distance to the landing spot of the concrete elements on the bottom surface. The large radius of curvature, in its turn, requires the use of a relatively large ship, which can be a disadvantage for laying operations in narrow passages or in shallow waters. This problem can be reduced by making the concrete elements shorter in the laying direction than in the width direction, but this results in a larger number of concrete elements per unit of length unit and thus a more expensive protective installation. Another problem with the previously known concrete elements is that the laying operation requires the use of a long laying cable, which is removed after the laying operation. The length of the laying cable has to be larger than the length of the protective structure which is to be laid, and the long cable is very heavy and cumbersome to handle. Still another disadvantage of the prior art is that the previously known concrete elements, when laid in a long row after each other, have a continuous lateral surface which is rather large, and which therefore is subjected to large forces from sea currents and other water movements. This can cause bottom sediment to be washed away underneath the concrete elements, so that they are undermined or displaced out of position. This, in its turn, results in gaps and level differences between the laid-out concrete elements, which implies a reduced protection for the underwater installation and an increased risk of fishing implements and the like getting stuck on the concrete elements.

### SUMMARY OF THE INVENTION

Accordingly, a first object of the present invention is to provide a concrete element which provides a safe protection for an underwater installation without any additional covering, and which does not require any high cranes or hoisting devices for the laying operation.

This first object is achieved by means of a concrete element according to claim 1, which is shaped as an elongated, curved shell segment having two gable ends, a bottom side between the gable ends which is designed with a longitudinal cavity for receiving the underwater installation when laying the concrete element, a top side between the gable ends, and at least two through-going apertures from the top side to the cavity, wherein the projection of the gable ends is inclined so that the top side becomes longer than the bottom side, and the concrete element is provided with, at least one connecting member for interconnection with a corresponding connecting member of another concrete element and the connecting members are of a design such that the distance between the outer edges of the gable ends of two interconnected concrete elements becomes smaller than 30 centimetres after the laying operation, where the top side (6) decreases in height from the centre towards the sides (16, 17) and describes a smooth curve shape and/or that the top side has bevelled edges at the transition to the gable ends, such that low frictional resistance against a trawl dragged over the element after the laying operation is obtained.

The design of the gable ends of the concrete element according to the invention results in a smaller radius of curvature, for downward deflection of a row of interconnected such concrete elements, and therefore eliminates the need of high cranes or hoisting devices during the laying operation. Furthermore, the sloping gable ends create openings for free water flow between laid-out concrete elements, which makes the concrete elements less sensitive to forces from water currents and reduces the risk of them being undermined or displaced out of position. Furthermore, the openings between the concrete elements provide passages into the underlying cavity which are suitable for larger marine organisms, such as fish and lobsters. The connecting members enable two or several concrete elements to be interconnected and laid without any laying cable with a larger length than the row of concrete elements which is to be laid. Furthermore, the interconnection gives better stability to the row of laid concrete elements and reduces the risk that the concrete elements are displaced relative to each other. The small distance between the gable ends, enabled by the connecting members, reduces the risk of a trawl or other fishing implement getting stuck on the row of interconnected concrete elements.

A second object of the present invention is to provide a mould for efficient manufacturing of concrete elements which provide the advantages described in the foregoing.

This second object is achieved by means of mould according to claim 6, which comprises bottom and cover parts which, in a closed position, enclose a mould cavity having an opening for concrete filling, and which, in an open position, allow removal of a casted concrete element, wherein at least one cover part is The pivoting cover part(s) of the mould according to the invention results in a faster manufacturing process since it is easy to open the mould to lift out the casted concrete elements.

A third object of the invention is to provide an efficient method of manufacturing concrete elements which provide the advantages described in the foregoing.

9 This third object is achieved by means of a method according to claim 9, which makes use of a mould comprising bottom and cover parts which, in a closed position, enclose a mould cavity having an opening for concrete filling, and which, in an open position, allow removal of a casted concrete element, wherein at least one cover part is pivotally arranged relative to the bottom part so that the cover part can be pivoted to the side to an open position or back to a closed position, wherein the method comprises the steps of closing the cover parts of the mould against the bottom part of the mould, injecting a concrete composition into the mould via an opening, vibrating the concrete composition in the mould when necessary, causing the concrete composition in the mould to cure at least partially, opening the cover parts of the mould, and removing an at least partially cured concrete element from the mould, wherein the mould cavity of the mould being used in the method, as seen in the transverse direction of the mould, describes a substantially rectilinear, horizontal upper contour and two opposite gable end contours connected to the upper contour at acute angles, and the method further comprises the step of arranging longitudinal reinforcement elements to bridge the mould cavity between the opposite gable ends of the mould, in a step before the concrete composition is caused to cure, and the step of applying at least one connecting member, for interconnection with a corresponding connecting member of another concrete element, on the concrete element by partial embedding into the concrete composition before curing, or fixing at least one connecting member, for interconnection with a corresponding connecting member of another concrete element, to the concrete element after the curing.

The method according to the invention enables an efficient production of concrete elements according to the invention, since it is easy to apply longitudinal reinforcement elements in a suitable position in the mould cavity, for example by supporting the reinforcement elements on supporting legs standing on the bottom part, since casted concrete elements rapidly and easily can be lifted out of the opened mould, and since connecting members easily can be partially embedded into the concrete element before curing when this is desired.

A fourth object of the present invention is to provide an arrangement for cost efficient and reliable laying of concrete elements, which provide the advantages described in the foregoing, from a ship.

This fourth object is achieved by means of an arrangement according to claim 11, which comprises at least one tool for interconnecting the concrete elements before the laying operation, wherein the concrete elements are designed such that the projection of the gable ends is inclined so that the top side becomes longer than the bottom side and so that a first concrete element exhibits a first connecting member for interconnection with a second connecting member of a second concrete element and said connecting members are designed to provide a distance between the gable ends of the two concrete elements, after the interconnection, which is smaller than 30 centimetres, and the tool comprises positioning means for bringing the first connecting member substantially flush to and next to the second connecting member in the correct position for interconnection by means of at least one connecting element, and wherein the connecting tool has an output end for interconnected concrete elements and the output end is connected to a laying device for the interconnected concrete elements.

The arrangement according to the invention enables concrete elements according to the invention to be interconnected and laid in a protective structure of a desired length over an underwater installation, such as a cable or pipeline.

Finally, a fifth object of the present invention is to provide a method for laying concrete elements, which provide the advantages described in the foregoing, from a ship.

This fifth object is achieved by means of a method according to claim 16, which comprises to interconnect concrete elements, which are designed such that the projection of the gable ends is inclined so that the top side becomes longer than the bottom side and so that a first concrete element exhibits a first connecting member for interconnection with a second connecting member of a second concrete element and wherein said connecting members are designed to provide a distance between the gable ends of the concrete elements after the interconnection which is smaller than 30 centimetres, and wherein the method further comprises to lay a row of the interconnected concrete elements with a radius of curvature, for downward deflection of the row, which is smaller than 25 metres, in order to form a protective structure over an underwater installation after the laying of the row onto a bottom surface.

The method according to the invention enables the laying operation to take place without any laying cable of a larger length than the protective structure and without any use of high cranes or hoisting devices. Furthermore, the method minimizes the risk that the concrete elements are displaced relative to each other after the laying operation. This will provide a safer protection for the underwater installation and less risk that fishing implements get stuck on the concrete elements.

### BRIEF DESCRIPTION OF DRAWINGS

In the following, the invention will be described with a number of different embodiments with reference to the attached drawings, in which
Figure 1A shows a view, obliquely from above, of a concrete element according to a first embodiment of the invention,
Figure 1B shows a side view of the concrete element according to the first embodiment,
Figure 1C shows a view from below of the concrete element according to the first embodiment,
Figure 1D shows a sectional view, along the line A-A in Figure 1C, of the concrete element according to the first embodiment,
Figure 1E shows a gable end view of the concrete element according to the first embodiment,
Figure 2 shows a side view of two concrete elements according to the first embodiment after interconnection,

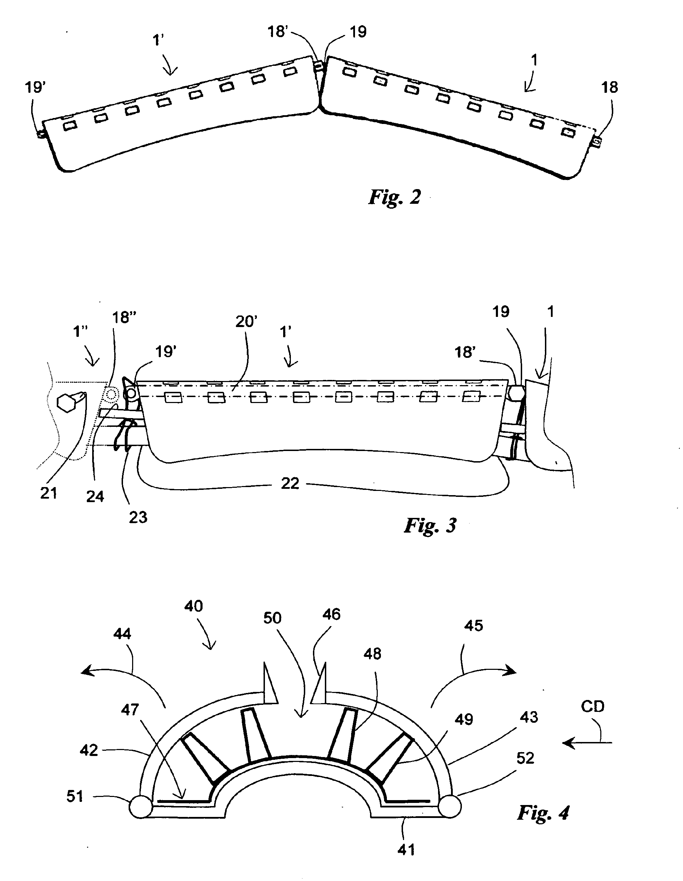

Figure 3 is a schematic illustration of two interconnected concrete elements according to the first embodiment, wherein the concrete elements have been provided with connecting members at the gable ends before the interconnection, a third concrete element is in the process of being connected to the interconnected concrete elements by means of a connecting element in the form of a pin, an underwater installation in the form of a cable is in the process of being suspended below the concrete elements by means of a suspending element in the form of a sling, and a chafe guard, in the form of rubber plate for protecting the cable, has been thread on the sling,
Figure 4 shows a schematic end view of a mould for manufacturing concrete elements according to a first embodiment of the invention,
Figure 5 shows a schematic end view of a mould for manufacturing concrete elements according to a second, preferred embodiment of the invention,
Figure 6 is a schematic illustration of an arrangement for laying concrete elements according to the invention from a ship, which arrangement comprises a tool for interconnecting the concrete elements before the laying operation,
Figure 7 is a schematic illustration of a method for laying interconnected concrete elements from a ship according to a first embodiment of the invention,
Figure 8 is a schematic illustration of a method for laying interconnected concrete elements from a ship according to a second embodiment of the invention, and
Figure 9 is a schematic illustration of a method for laying interconnected concrete elements from a ship according to a third embodiment of the invention.

### DESCRIPTION OF EMBODIMENTS OF THE INVENTION

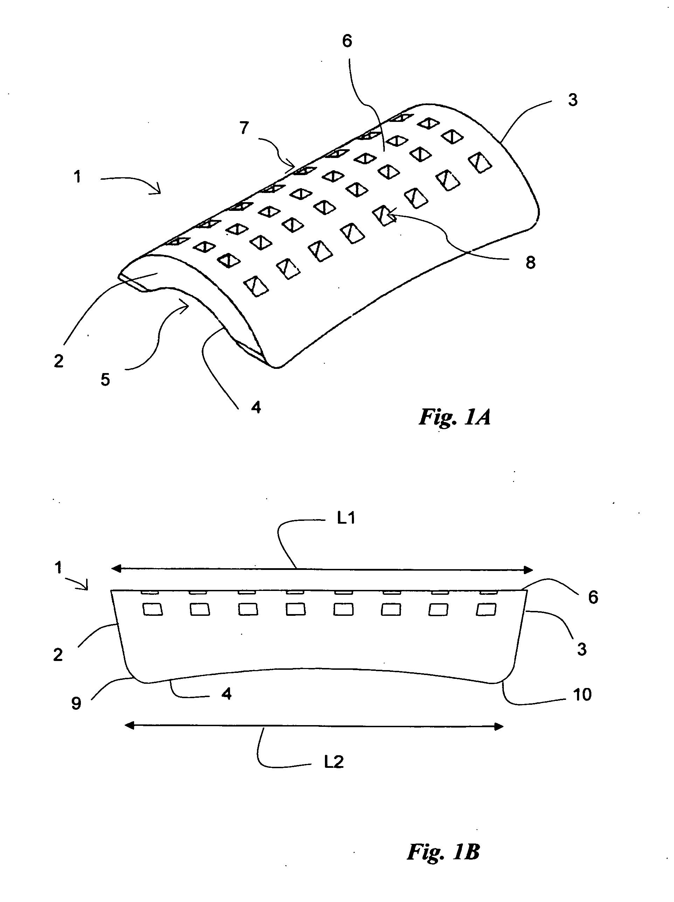

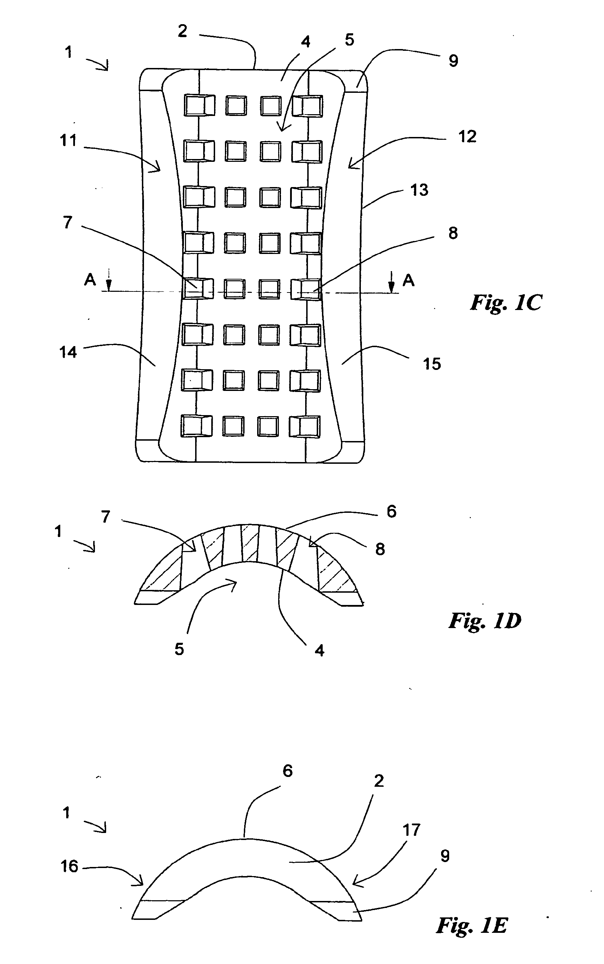

In the following, a number of embodiments of a concrete element for protecting an underwater installation according to the invention will be described in greater detail with reference to the attached Figures 1A-1E, 2 and 3.

The concrete element 1 is shaped as an elongated, curved shell segment having two gable ends 2, 3. The concrete element has a bottom side 4, between the gable ends, which is designed with a longitudinal cavity 5 for receiving the underwater installation when laying the concrete element. Furthermore, the concrete element has a top side 6, between the gable ends, which is designed for low frictional resistance against a trawl dragged over the element after the laying operation. In this context, "trawl" should be construed as if the expression also includes other dragged fishing implements which might damage a protective structure of laid concrete elements and the underlying underwater installation. The concrete element further comprises at least two through-going apertures 7, 8 from the top side 6 to the cavity 5. The through-going apertures can influence the flow-through of water and serve as passages for relatively small marine organisms.

According to the invention, the concrete element is characterized in that the projection of the gable ends 2, 3 is inclined so that the top side 6 becomes longer than the bottom side 4. This is schematically illustrated by the two arrows L1 (the length of the top side) and L2 (the length of the bottom side), respectively, in Figure 1B, wherein it is evident from the figure that L1 > L2. The design of the gable ends, according to the invention, enables a smaller radius of curvature, for downward deflection of a row of such concrete elements, during the laying operation. If one imagines that the two concrete elements shown in Figure 2 are in the process of being laid from a ship, it will be appreciated that the sloping gable ends, according to the invention, allow a larger downward deflection during the laying operation than what otherwise would be possible. Thereby, the concrete element according to the invention eliminates the need for the high cranes or hoisting devices which become necessary when the radius of curvature for downward deflection of a row of concrete elements is excessively large, as is often the case in the prior art. Another advantage is that the slope of the gable ends according to the invention creates openings for free flow-through of water between laid concrete elements. This makes concrete elements according to the invention less sensitive to forces from water currents after the laying operation, and reduces the risk of them being undermined or displaced out of position. Furthermore, the openings between the concrete elements provide passages into the underlying cavity which are suitable for larger marine organisms, such as fish and lobsters.

According to the invention, the concrete element 1 is further provided with (see Figure 2), or prepared for attachment of, at least one connecting member 18, 19 for interconnection with a corresponding connecting member 18' of another concrete element 1'. This feature is very advantageous, since it enables interconnection of several concrete elements for a laying operation without any laying cable with a larger length than the row of concrete elements which is to be laid. Furthermore, the interconnection gives better stability to a laid row of concrete elements and reduces the risk of the concrete elements being displaced relative to each other. According to the invention, the connecting members 19, 18' (see Figure 3) are of a design such that the distance between the outer edges of the gable ends of two interconnected concrete elements 1, 1' becomes smaller than 30 centimetres after the laying operation. Such a small distance between the gable ends reduces the risk of a trawl board getting stuck between the concrete elements. Even more advantageously, the connecting members 18, 19 extend less than 20 centimetres outside the gable ends 2, 3 and are designed such that the distance between the outer edges of two interconnected gable ends becomes smaller than 20 centimetres. This embodiment reduces the risk of a trawl board getting stuck even further.

In a preferred embodiment of the invention, the concrete element 1 has connecting members 18, 19 at both gable ends. This enables interconnection and laying of an optional number of concrete elements in a protective structure of a desired length, without using any long cable for the laying operation. When laying first 1 and second 1' interconnected concrete elements, the connecting members 19, 18' are designed such that they allow a relatively large downward deflection of the first concrete element 1 relative to the second, subsequent concrete element 1', at the same time as the connecting members 19, 18' only allow a relatively small lateral deflection and only an insignificant rotation between the interconnected concrete elements 1, 1'. Such a design gives the smallest possible laying radius, and an facilitates a precise laying of a long row of concrete elements in a desired position on a bottom surface.

As has become evident in the foregoing, it is advantageous with concrete elements allowing a radius of curvature which is as small as possible when laying a row of such concrete elements. Thus, in the preferred embodiment, the concrete element 1 exhibits bevelled and preferably rounded corners 9, 10 at the transition between the bottom side 4 and at least one of the gable ends 2, 3 (see Figure 1B). This allows an even smaller radius of curvature during the laying operation. Another advantage is that bevelled, and preferably rounded corners, preferably at both ends of the concrete element, allow the concrete element to slide more easily over an edge of a laying platform, railing, or the like, during the laying operation.

In the preferred embodiment, the bottom side 4 of the concrete element is further designed with longitudinal support runners 11, 12 at the sides of the cavity 5 (see Figure 1C), wherein the support runners have a concave outer contour 13 in the longitudinal direction of the concrete element. Such a concave design can allow an even smaller radius of curvature during the laying operation (the bottom side of the concrete element is "curved inward"). Furthermore, the support runners facilitate the sliding over a laying platform, railing, or the like. A further advantage with the concave outer contour 13 of the support runners is that it creates relatively large, longitudinal openings and enables an increased flow-through of water between the concrete element and the bottom surface on which the concrete element is supported. Another advantage is that the large longitudinal openings are suitable as passages for larger marine organisms, such as bottom-living fish and lobsters.

It is advantageous if the bottom side 4 of the concrete element exhibits portions designed as substantially smooth support surfaces 14, 15. In the embodiment shown in Figure 1C, the support surfaces are constituted of smooth portions of the support runners. With suitable positioning and dimensioning, such smooth support surfaces can further facilitate the sliding over a laying platform during the laying operation. The smooth support surfaces can also be designed to locally achieve a tight and stable contact between the concrete element and the bottom surface after the laying operation (not shown in the Figures) to thereby create a larger number of separate chambers for marine life underneath a row of laid concrete elements. Furthermore, the bottom side of the concrete element can advantageously exhibit exposed portions of a low friction material (not shown in the Figures). Such a design can further facilitate the sliding ability of the concrete element across a laying platform or the like. The bottom side can also exhibit exposed portions of a plastic material or metallic material at the corners and/or along a longitudinal support runner (not shown in the Figures). Such an embodiment can be advantageous to reduce the risk that the concrete element is scratched or otherwise damaged during the laying operation or other handling.

In the preferred embodiment of concrete element according to the invention, the top side 6 decreases in height from the centre towards the sides 16, 17 and describes a smooth curve shape, as shown in Figure 1E. Such a design reduces the risk of a trawl or other fishing implement getting stuck on the concrete element, and also reduces the force exerted on the concrete element by a water current. However, it is also possible with embodiments of the invention where the concrete element has a cross-sectional shape which substantially describes half a rectangle (not shown in the Figures). Such a cross-sectional shape can be advantageous since it facilitates the fabrication of a mould for casting the concrete element.

In one embodiment of the invention, the top side of the concrete element has bevelled edges at the transition to the gable ends (not shown in the Figures). This embodiment is advantageous since it allows a smaller radius of curvature "upwards" of a row of concrete elements which are in the process of sliding over a railing or about to "land" on the sea bottom. With a suitably adapted bevelling, it is also possible to reduce the risk of fishing implements getting stuck in the gaps between two adjacent concrete elements and, furthermore, to reduce the force exerted on the concrete element in a lateral direction by a sea current.

The concrete element 1 preferably exhibits a pattern of through-going apertures 7, 8 across the major portion of its surface, as shown in Figure 1A. Such an aperture pattern provides maximum through-flow of water and reduces the risk of undermining of the concrete element. Furthermore, the large number of apertures serves as passages for smaller marine organisms. The concrete element advantageously exhibits a local interruption in the aperture pattern close to the highest point of the top side of the concrete element. Such an interruption in the aperture pattern is advantageous since it leaves space for longitudinal reinforcement which is cast into the concrete element.

The concrete element 1, 1' and the connecting members 19, 18' are preferably of a design which enables laying of a row of interconnected concrete elements with a radius of curvature, for downward deflection of the row, which is smaller than 25 metres. Even more advantageously, the concrete element and the connecting members are of a design which enables laying of a row of interconnected concrete elements with a radius of curvature, for downward deflection of the row, which is about 5 metres. Such a small radius of curvature ensures that the laying operation can be executed without any high cranes or the like. The connecting members 18', 19' are preferably constituted of, or attached to, ends of a longitudinal reinforcement element 20' extending between the gable ends of the concrete element 1' (as indicated in Figure 3). This ensures that concrete element does not break during the laying operation, and also makes it possible to fabricate inexpensive connecting members from protruding ends of reinforcement bars or to attach separate connecting members to such ends. Advantageously, the connecting members comprise lugs 19', 18" (see Figure 3) which can be interconnected by means of connecting elements 21, such as dowels, bolt-nut connections, pins, or other suitable elements. Such a connecting system enables rapid interconnection of the concrete elements during the laying operation. Two interconnected connecting members 19, 18', between two interconnected concrete elements, can preferably support a load of at least 1000 kilograms. Such a dimensioning ensures that the connecting members do not break when laying normal sized elements without any special laying cable passing through the entire row of concrete elements. The connecting members 19, 18', 19', 18" (see Figure 3) are advantageously of a design which allows a portion of the underwater installation 22 to be suspended from and/or fixed to them when laying a plurality of concrete elements 1, 1', 1" in a row. Such a design makes it possible to fix a portion of the underwater installation 22 in position relative to the overlying protective structure at regular intervals. The connecting members 19', 18" are preferably adapted to be enclosed by a sling 23. This makes it possible to suspend a portion of the underwater installation, such as a cable, from the sling, in a simple, inexpensive and rapid way. Another advantage with such a flexible sling suspension is that the cable can move sufficiently after the suspension to avoid that the cable is damaged by excessive tensile or bending forces, or by jerks from the concrete elements, during the laying operation. The connecting members of the concrete element according to the invention advantageously comprise, or are designed for receiving, resilient bushings (not shown in the Figures). Such resilient bushings are advantageous since they can absorb shocks during the laying operation and other handling, so that the connecting members or the concrete element do not break.

The concrete element according to the invention can advantageously be provided with a quick connection element on the bottom side (not shown in the Figures). The quick connection element can, for example, be constituted of a cast-in or screwed-in lug from which the underwater installation can be suspended by means of snap hooks or the like. Such a quick connection element can enable a faster and easier suspension of the underwater installation underneath the concrete elements and increase the laying speed.

The concrete element 1, 1' according to the invention is advantageously of a design which enables simple attachment of a chafe guard 24 on the bottom side, in the vicinity of the gable end (as shown in Figure 3). Such a chafe guard can be constituted of plastic or rubber plates which are thread on each sling to avoid damages on a cable, pipeline, or other underwater installation during the laying operation. It is also conceivable with embodiments of the invention where the chafe guard is attached to the bottom side of every second concrete element, for example to a bracket intended for this purpose, close to the gable end of the concrete element.

The concrete element 1' according to the invention preferably encloses a reinforcement structure 20' which is continuous in the longitudinal direction of the concrete element. In this way, it is ensured that the concrete element does not break when laying a long row of concrete elements without any special laying cable with a larger length than the laid row of concrete elements. The concrete element can also enclose a reinforcement structure in the form of a continuous netting (not shown in the Figures). Such a reinforcement structure can be advantageous in applications where the concrete element needs high strength in all directions. Furthermore, the concrete element can enclose a reinforcement structure in the form of a torsional reinforcement. Torsional reinforcement refers to a reinforcement structure which is specially designed to prevent the concrete element from being damaged by torsional forces during the laying operation.

Advantageously, the concrete element according to the invention can be made of so called dry concrete. The use of dry concrete results in a shorter curing time and a faster production of concrete elements. The concrete element advantageously contains a light-weight material as a concrete aggregate. The light-weight material can consist of so-called Leca granules or other light materials which make it possible to reduce and control the weight and buoyancy of the concrete element. The concrete element can also contain a fibre material as an additional reinforcement, in order to obtain higher strength and toughness. In certain cases, such an addition of fibre material can be sufficient as the only reinforcement for lighter concrete elements. Furthermore, the concrete element can comprise a polymer composition. Such an addition of one or several suitable polymer compounds can improve various properties of the concrete element, such as toughness, salt water resistance, etc. Advantageously, the concrete element according to the invention can contain completely or partially cast-in rails, strips, plates, boards or pieces of low-friction material, metal, plastic or rubber (not shown in the figures). This embodiment makes it possible to create local sliding surfaces with low friction for the connecting and/or laying of the concrete element, or to create local areas with high strength which reduce the risk of the concrete element cracking or being scratched. Such cast-in elements can also be utilized to provide suitable material for a stable screw-attachment of connecting members on the concrete element after the curing.

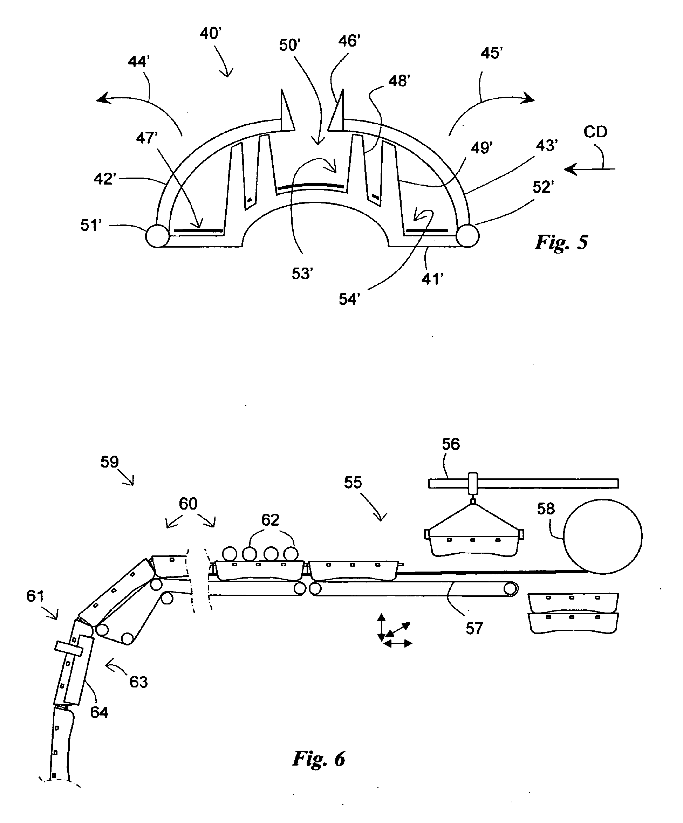

In the following, different embodiments of a mould for manufacturing concrete elements according to the invention will be described in greater detail with reference to the schematic illustrations in the attached Figures 4 and 5. The mould 40; 40' comprises bottom and cover parts 41, 42, 43; 41', 42', 43' which, in a closed position, enclose a mould cavity having an opening for concrete filling, and which, in an open position, allow removal of a casted concrete element. Furthermore, at least one cover part 42, 43; 42', 43' is pivotally arranged relative to the bottom part 41; 41' so that the cover part can be pivoted to the side to an open position or back to a closed position. Such a design of the mould gives a faster and easier manufacturing process since the pivoting cover part(s) makes it easy to open the mould, to lift out a casted concrete element, and to thereafter prepare the mould for the next casting.

Preferably, the mould 40; 40' has first 42; 42' and second 43; 43' cover parts which both are pivotally arranged 44, 45; 44', 45' relative to the bottom part 41; 41', whereby the advantage is obtained that two smaller pivoting cover parts are easier to handle than a single, larger cover part. Advantageously, the cover parts 42, 43; 42', 43' of the mould 40; 40' are attached to the bottom part 41; 41' by means of hinges 51; 52; 51', 52' at the long sides of the mould. Such a design gives a stable mould with cover parts which can be opened quickly and easily. Advantageously, the first and second cover parts create the opening 46; 46' for concrete filling between themselves when they are in a closed position (as shown in Figures 4 and 5). Such an embodiment makes it easy to provide a filling opening of a desired size and shape. The opening 46; 46' for concrete filling is preferably placed close to the highest point of the mould, to make it possible to fill the mould with concrete without any pressurization. Furthermore, the opening 46; 46' is advantageously placed near the centre of the mould 40; 40' in the horizontal plane, this in order to make it easier to achieve an even distribution of concrete throughout the entire mould cavity. The opening for concrete filling is advantageously designed as a slit 46; 46' or a funnel. Such a design facilitates the filling of concrete and minimizes the risk of spillage. An opening designed as a longitudinal slit across the entire mould can in an advantageous way be used for inserting a concrete vibrator after the filling and/or for lowering down longitudinal reinforcement elements from above.

According to the invention, the mould cavity, as seen in the transverse direction CD (as indicated by the arrows in Figures 4 and 5) of the mould 40; 40', describes a substantially rectilinear, horizontal upper contour and two opposite gable end contours connected to the upper contour at acute angles. This mould geometry produces concrete elements according to the invention which can be laid in a row with a small radius of curvature. In the preferred embodiment of the mould according to the invention, the mould cavity, as seen in the transverse direction CD (as indicated in Figs. 4 and 5) of the mould 40; 40', describes a curved lower contour which is concave inwards toward the centre of the mould cavity and which is connected to said gable end contours via rounded corners. This mould geometry produces concrete elements which provide suitable passages for larger marine organisms and which enable improved water circulation underneath the concrete elements. In the preferred embodiment, the mould 40; 40' according to the invention comprises a removable curing plate 47; 47' adapted to be placed on top of the bottom part 41; 41'. Such a removable curing plate makes it possible to manufacture concrete elements faster. The curing plate serves as a support for an overlying concrete element which is not completely cured. The concrete element and the curing plate can thus be lifted out after a shorter curing time and be brought to a separate station for post-curing, at the same time as another curing plate is placed in the mould and casting of the next concrete element starts. In the preferred embodiment of the mould, the upper side of the bottom part 41 and/or the curing plate 47', as seen in the longitudinal direction of the mould, substantially describe(s) an inverted U with two horizontal shanks extending outwards from the inverted U towards the long sides of the mould 40; 40'. This mould geometry produces concrete elements according to the invention with a longitudinal cavity for the underwater installation to be protected, and with support runners at the sides of the cavity to facilitate the movement, connection, laying, and abutment contact against a bottom surface. In the preferred embodiment, the bottom side of the cover parts 42, 43; 42', 43' in a closed position, as seen in the longitudinal direction of the mould 40, 40', substantially describes an inverted U. This mould geometry produces a smooth curve shape of the top side of the finished concrete element, which reduces the risk of a trawl or other fishing implement getting stuck and the forces exerted on the concrete element by a sea current after the laying operation.

In one advantageous embodiment (not shown in the drawings) the mould has an opening from the interior of the mould cavity to the outside of the mould, at least at one of said gable end contours, for enabling insertion of one end of a connecting member therethrough. This embodiment enables the connecting member to be partially cast-in inside the concrete element.

In a first embodiment of the mould according to the invention, shown in Figure 4, the curing plate 47 has a plurality of spaced apart protrusions 48, 49 on its upper side which substantially bridge the space between the bottom part 41 and the cover parts 43. Such a design of the curing plate makes it easy to achieve through-going apertures in the concrete element in a desired pattern. Variants of the invention where the mould has protrusions which are only temporarily attached to the curing plate during the casting (as shown in Figure 4) or protrusions which are permanently attached to or integrated with the curing plate (not shown in the Figures) are also possible.

In a second, preferred embodiment of the mould according to the invention, shown in Figure 5, the bottom part 41' has a plurality of spaced apart protrusions 48', 49' on its upper side which substantially bridge the space between the bottom part 41' and the cover parts 42', 43', wherein the curing plate 47' is designed with a number of through-going apertures 53', 54', and wherein the protrusions and the apertures are designed such that the protrusions 48', 49' protrude through the apertures 53', 54' when the curing plate 47' is in the mould 40' and so that the protrusions can slide out through the apertures when the curing plate is removed from the mould. The curing plate 47' and the protrusions 48', 49' in the preferred embodiment of the mould makes it possible to manufacture concrete elements with a desired pattern of through-going apertures. The protrusions are preferably permanently attached to or integrated into the bottom part of the mould, as shown in Figure 5, but embodiments with temporarily attached protrusions are also possible.

Protrusions 48, 49 which are temporarily attached to the curing plate (as shown in Figure 4) and/or to the bottom part (not shown in the Figures) can be advantageous since they facilitate the removal of the concrete element from the curing plate and/or the bottom part after the curing. Furthermore, temporarily attached protrusions make it possible to achieve aperture shapes and patterns which otherwise would be impossible, for example such shapes and patterns which would lead to a jamming preventing the release of the concrete element from the curing plate with attached protrusions after the curing. Temporary attachment can, for example, be achieved by clamping tubular protrusions to suitably designed brackets or holders (not shown in the Figures) which, depending on the embodiment in question, either are fixed to the curing plate or to the upper surface of the bottom part. The protrusions 48, 49; 48', 49' are preferably arranged in a pattern with a longitudinal interruption 50, 50' in the pattern extending continuously between two short sides of the mould 40, 40'. This interruption in the pattern is dimensioned to leave space for a continuous, longitudinal reinforcement structure between the gable ends of a casted concrete element. Such a longitudinal reinforcement structure ensures that the concrete element does not break or rupture during the laying operation. The protrusions 48, 49; 48', 49' are preferably tapering inward from the curing plate 47; 47' and upwards, wherein "upwards" should be construed as upwards relative to the bottom part of the mould. Such a design facilitates the release of the protrusions from the concrete element after the curing. However, it is also conceivable with embodiments of the invention where the protrusions have other shapes, e.g. a cylinder shape. The protrusions can also have a cornered shape, which can make it easier to fabricate the protrusions. Alternatively, the protrusions can have a bevelled or rounded cross-section, which can facilitate the release of the protrusions from a cured concrete element, and which, furthermore, produces through-going apertures with a shape which reduces the risk of cracking during the curing and results in a stronger finished concrete element. In one embodiment, the protrusions are constituted of sheet metal pieces applied by welding. This is an economically advantageous way of achieving protrusions in a desired pattern on a curing plate or bottom part of weldable metal.

In the following, different embodiments of a method of manufacturing concrete elements according to the invention will be described in greater detail, when applicable with reference to the attached Figures 4 and 5. The manufacturing method according to the invention makes use of a mould comprising bottom and cover parts which, in a closed position, enclose a mould cavity having an opening for concrete filling, and which, in an open position, allow removal of a casted concrete element, wherein at least one cover part is pivotally arranged relative to the bottom part so that the cover part can be pivoted to the side to an open position or back to a closed position. The method comprises the steps of closing the cover parts 42, 43; 42', 43' of the mould 40; 40' against the bottom part 41; 41' of the mould, injecting a concrete composition into the mould via an opening 46; 46', vibrating the concrete composition in the mould when necessary, causing the concrete composition in the mould to cure at least partially, opening the cover parts 42, 43; 42', 43' of the mould, and removing an at least partially cured concrete element from the mould. According to the invention, the mould cavity of the mould, as seen in the transverse direction CD of the mould 40; 40', describes a substantially rectilinear, horizontal upper contour and two opposite gable end contours connected to the upper contour at acute angles. According to the invention, the method further comprises the step of arranging longitudinal reinforcement elements to bridge the mould cavity between the opposite gable ends of the mould, in a step before the concrete composition is caused to cure, and the step of applying at least one connecting member, for interconnection with a corresponding connecting member of another concrete element, on the concrete element by partial embedding into the concrete composition before curing, or fixing at least one connecting member, for interconnection with a corresponding connecting member of another concrete element, to the concrete element after the curing. The manufacturing method enables an efficient production of concrete elements shaped according to the invention, providing the advantages described in the foregoing, since it is easy to apply longitudinal reinforcement elements in a suitable position in the mould cavity, for example on support legs standing on the bottom part, and since it goes quickly and easily to lift casted concrete elements out of the opened mould.

In one advantageous embodiment of the manufacturing method (not shown in the drawings), at least one end of a connecting member is brought through an opening in at least one of the gable ends of the mould before the curing. This enables one end of the connecting member to be partially enclosed in the concrete composition before the curing. Such an embodiment makes it possible to partially embed connecting lugs with dowels, plates or other corresponding members, which advantageously are attached to the longitudinal reinforcement in a suitable way, before the casting. Alternatively, at least one connecting member can be fixed to the concrete element after the curing. Such an embodiment makes it possible to attach a lug or the like to a protruding reinforcement bar of a concrete element, or to screw a lug bolt into a cast-in plate or the like. Such later mounting of connecting members can be advantageous since it reduces the risk of the connecting members being damaged by handling before the laying operation.

In a preferred embodiment of the invention, the manufacturing method further comprises to place a removable curing plate 47; 47' on the bottom part of the mould before the cover parts are closed, and to lift out the curing plate and an overlying, at least partially cured concrete element from the mould after the cover parts have been opened. As has been mentioned in the foregoing, the curing plate makes it possible to lift the concrete elements out of the mould before they are completely cured.

In a particularly preferred embodiment of the manufacturing method according to the invention, several at least partially cured concrete elements are finally cured laying on curing plates of their own in a separate final curing station, at the same time as the mould is used for manufacturing another concrete element. This embodiment enables a higher production rate, since it is not necessary to wait for the final curing before casting the next concrete element.

The concrete composition is preferably injected close to the highest point of the mould cavity. This enables the entire mould to be filled without any pressurization. Even more advantageously, the concrete composition is injected close to the centre of the mould cavity, which makes it easier to achieve an even distribution in the mould, all the way out to the sides. In an alternative embodiment, the longitudinal reinforcement elements are lowered down into the concrete composition through the opening for concrete injection. In particular when the opening into the mould is designed as a longitudinal slit, this embodiment provides a simple way of applying the reinforcement elements in a desired position, e.g. suspended from above in ropes.

In another embodiment, at least one quick connection element is applied to the concrete element by means of partial embedding into the concrete composition before the curing or by fixing it to the concrete element after the curing. Such a quick connection element facilitates the suspension of a cable or another underwater installation from the bottom side of the concrete element during the laying operation. In still another advantageous embodiment of the manufacturing method according to the invention, rails, strips, plates, boards or pieces of low friction material, metal, plastic or rubber are arranged locally in the mould cavity before the concrete injection. This embodiment provides a simple way of achieving local sliding surfaces with low friction, local reinforcements which reduce the risk of cracking and scratching and/or local areas with suitable material for screw-attachment of connecting members after the curing.

In the following, an arrangement for laying concrete elements according to the invention from a ship will be described in greater detail, when applicable with reference to Figure 3 and to Figures 6-9. According to the invention, the arrangement 59 comprises at least one tool 55 for interconnecting the concrete elements before the laying operation, wherein the concrete elements are designed such that the projection of the gable ends is inclined so that the top side becomes longer than the bottom side and so that a first concrete element 1' exhibits a first connecting member 19' for interconnection with a second connecting member 18" of a second concrete element 1" and the connecting members 19', 18" are designed to provide a distance between the gable ends of the two concrete elements 1', 1", after the interconnection, which is smaller than 30 centimetres, wherein the tool 55 comprises positioning means for bringing the first connecting member 19' substantially flush to and next to the second connecting member 18" in a correct position for interconnection by means of at least one connecting element 21, and wherein said connecting tool has an output end for interconnected concrete elements and the output end is connected to a laying device 60 for the interconnected concrete elements.

In a particularly advantageous embodiment of the arrangement according to the invention the connecting members 18, 19 of the concrete elements extend less than 20 centimetres outside the gable ends 2, 3, wherein the positioning means are arranged for interconnecting the concrete elements with a distance between the gable ends which is smaller than 20 cm. The positioning means preferably comprise at least one lifting device 56 for placing the concrete elements on an alignment plane 57. The lifting device is advantageously a travelling crane 56, but can also be another suitable device. The alignment plane can advantageously be constituted of a conveyor belt 57, as shown in Figure 6. The alignment plane 57 is advantageously provided with suitably positioned guide means (not shown in the drawings) for positioning the concrete elements in the correct position for interconnection. By placing guide means such as guides or stoppers in connection with the alignment plane, the positioning of a concrete element in the correct position for interconnection is facilitated.

In one advantageous embodiment of the arrangement according to the invention, the tool 55 comprises a means for applying connecting elements 21, with a resilient bushing if needed, between the connecting members 19', 18". These means can, in their simplest form, be a pliers holding a pin or the like which, possibly with a resilient bushing, is manually pressed or tapped into the lugs.

In another embodiment of the arrangement according to the invention, the tool 55 comprises a means for suspending an underwater installation 22 underneath the concrete element 1, 1' by means of a suspending element 23. This suspending means can e.g. be a suitable feeding device which keeps a cable tensioned in the correct position for suspension, e.g. by means of a sling, underneath the row of concrete elements.

In the preferred embodiment of the arrangement according to the invention, the underwater installation is a cable or pipeline. In one embodiment, the underwater installation is a cable or pipeline which is can be guided into the tool 55 from a drum 58 in the vicinity of the tool. In still another embodiment, the underwater installation is a cable or pipeline provided in coils on the deck of the ship.

The tool 55 advantageously comprises a means for applying a chafe guard 24 underneath the concrete element 1, 1', in the vicinity of the connecting members 19', 18".

It is conceivable with embodiments of the arrangement according to the invention where the positioning means 56, 57, the means for applying connecting elements 21, possibly with resilient bushings, the means for suspending the underwater installation 22 by means of a suspending element 23 and/or the means for applying chafe guards 24 is/are realized and/or controlled manually. In the preferred embodiment, however, one or several of the above-mentioned means are controlled by a microprocessor.

In the preferred embodiment of the arrangement according to the invention, the laying device 60 comprises a conveyor belt which transports the interconnected concrete elements further on from the connecting tool 55 in a direction towards a laying element 61 outside the railing of the ship. In this embodiment, the conveyor belt is preferably provided with braking devices 62 for controlling the output speed of the interconnected concrete elements in a direction towards the laying element 61.

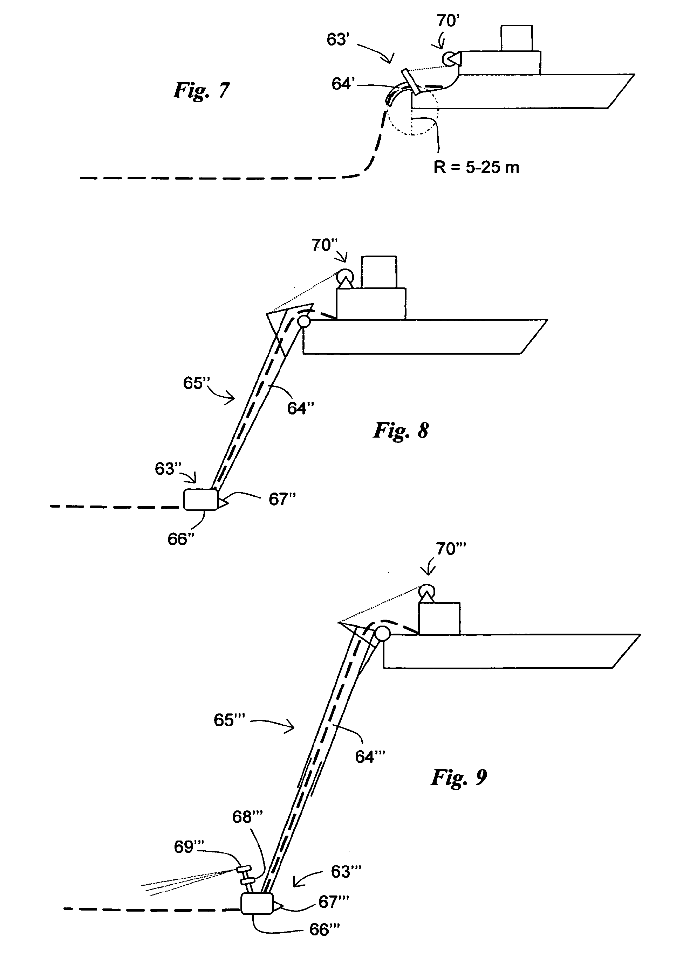

In a first alternative, preferred embodiment of the arrangement according to the invention, illustrated schematically in Figure 7, the laying element consists of a guiding means 63' hinged from the railing of the ship after the output end of the conveyor belt, wherein the guiding means has at least one passage 64 through which the interconnected concrete elements pass while being laid into the water. In this context, "passage" means that the guiding means has a geometrical shape which, at least laterally, retains and controls the direction of the row of concrete elements during the laying operation. In this embodiment, the guiding means 63' is advantageously arranged such that it, in a downturned position, is at least partially below the water surface during the laying operation. Furthermore, the guiding means 63' preferably can be turned to a desired laying angle, at least in a "vertical direction". In the embodiment illustrated in Figure 7, the guiding means 63' is hinged directly from the stern of a smaller ship. During the laying operation, the laying angle of the row of interconnected concrete elements (the dashed line) will be aligned with the guiding means slightly below the water surface, after which the row of interconnected concrete elements will travel without any further guiding towards the bottom surface of the sea, lake or stream. This embodiment is particularly well suited for laying operations in smaller water depths, or when the final positioning of the concrete elements and the underlying installation is less critical, for example when the bottom conditions are constant during the entire laying operation.

In a second alternative, preferred embodiment of the arrangement according to the invention, illustrated schematically in Figure 8, the guiding means 63" is arranged at the outer end of an arm 65" having a fixed length which is hinged from the railing of the ship, wherein the arm has at least one passage 64" through which the interconnected concrete elements pass on their way to the to the guiding means 63". In this context, "passage" means that the arm has a geometrical shape which is capable of retaining and controlling the direction of the row of concrete elements on their way down towards the guiding means. In this embodiment, the arm 65" and the attached guiding means 63" preferably can be turned to a desired laying angle, wherein the arm has a total length within the range 30-35 metres. In this embodiment, the arm 65" advantageously consists of separate structural elements joined together by means of wires. In another advantageous embodiment, the arm 65" exhibits buoyancy, but sinks towards the bottom surface when the laying of interconnected concrete elements starts. This second embodiment is suitable for medium water depths and/or when the exact positioning of the row of concrete elements is important, e.g. in varying bottom conditions.

In a third alternative, preferred embodiment of the arrangement according to the invention, illustrated schematically in Figure 9, the guiding means 63"' is arranged at the outer end of a telescopic arm 65"', having an adjustable length, which is hinged from the railing of the ship, wherein the arm has at least one passage 64"' through which the interconnected concrete elements pass on their way to the guiding means. The telescopic arm 65" and the attached guiding means 63"' preferably can be maintained at a desired laying angle irrespective of varying water depth, by adjusting the length of the telescopic arm, wherein the length of the telescopic arm 65"' can be adjusted within the range 10-30 metres. This third embodiment is suitable for larger water depths and/or when the exact positioning of the laid row of concrete elements is particularly critical.

In the second and third alternative, preferred embodiments described in the foregoing and illustrated schematically in Figures 8 and 9, the guiding means 63"; 63"' and/or the arm close to the guiding means advantageously exhibit(s) a sledge 66", 66"' having means 67", 67"' for clearing the bottom surface at which the interconnected concrete elements and the underwater installation will be placed after the laying operation. In another advantageous embodiment, the guiding means 63"' and/or the arm close to the guiding means is/are provided with at least one camera 68"' and illuminating means 69"' for inspection of the bottom surface and/or observation of the laying operation.

Advantageously, a hoisting device 70'; 70"; 70"' is connected to the guiding means 63' and/or the arm 65"; 65"' for raising it/them during transport and lowering it/them during the laying operation.

In the following, a method for laying concrete elements according to the invention from a ship will be described in greater detail, when applicable with reference to Figure 3 and to Figures 7-9. According the invention, the laying method comprises to interconnect concrete elements, which are designed such that the projection of the gable ends is inclined so that the top side becomes longer than the bottom side and so that a first concrete element 1' exhibits a first connecting member 19' for interconnection with a second connecting member 18" of a second concrete element 1" and wherein said connecting members 19', 18" are designed to provide a distance between the gable ends of said concrete elements 1', 1" after the interconnection which is smaller than 30 centimetres, and preferably smaller than 20 centimetres. According to the invention, the method further comprises to lay a row of the interconnected concrete elements with a radius of curvature R (see Figure 7), for downward deflection of the row, which is smaller than 25 metres, and preferably about 5 metres, in order to form a protective structure covering an underwater installation after the laying of said row onto a bottom surface.

In a preferred embodiment of the laying method, the underwater installation is a cable or pipeline which is laid together with the interconnected concrete elements. In a particularly advantageous embodiment, the underwater installation is suspended underneath the row of concrete elements during the laying operation.

In the foregoing, the present invention has been described with the aid of a number of different embodiments and with reference to the attached drawings. It should be understood, however, that the invention is not limited to the described embodiments and to what is shown in drawings, and that other embodiments are conceivable within the scope of the following claims.

## Claims

1. A concrete element for protecting an underwater installation, said concrete element (1; 1', 1") being shaped as an elongated, curved shell segment having two gable ends (2, 3), a bottom side (4) between the gable ends which is designed with a longitudinal cavity (5) for receiving the underwater installation when laying the concrete element, a top side (6) between the gable ends, and at least two through-going apertures (7, 8) from the top side (6) to the cavity (5), **characterized in that** the projection of the gable ends (2, 3) is inclined so that the top side (6) becomes longer than the bottom side (4), wherein the concrete element (1) is provided with at least one connecting member (18, 19) for interconnection with a corresponding connecting member (18') of another concrete element (1') and said connecting members (19, 18') are of a design such that the distance between the outer edges of the gable ends of two interconnected concrete elements (1, 1') becomes smaller than 30 centimetres after the laying operation, where the top side (6) decreases in height from the centre towards the sides (16, 17) and describes a smooth curve shape and/or that the top side has bevelled edges at the transition to the gable ends, such that low frictional resistance against a trawl dragged over the element after the laying operation is obtained.

2. The concrete element according to claim 1, **characterized in that** the concrete element (1) exhibits bevelled and preferably rounded corners (9, 10) at the transition between the bottom side (4) and at least one of the gable ends (2, 3).

3. The concrete element according to claim 1 or 2, **characterized in that** the bottom side (4) is designed with longitudinal support runners (11, 12) at the sides of the cavity (5), and that the support runners have a concave outer contour (13) in the longitudinal direction of the concrete element.

4. The concrete element according to any one of the preceding claims, **characterized in that** the concrete element (1) has connecting members (18, 19) at both gable ends.

5. The concrete element according to any one of the preceding claims, c h a ra cte ri zed i n that the concrete element (1, 1') and the connecting members (19, 18') are of a design which enables laying of a row of interconnected concrete elements with a radius of curvature, for downward deflection of the row, which is smaller than 25 metres.

6. A mould for manufacturing concrete elements according to any one of the claims 1-5, wherein the mould (40; 40') comprises bottom and cover parts (41, 42, 43; 41', 42', 43') which, in a closed position, enclose a mould cavity having an opening for concrete filling, and which, in an open position, allow removal of a casted concrete element, and wherein at least one cover part (42, 43; 42', 43') is pivotally arranged relative to the bottom part (41; 41') so that the cover part can be pivoted to the side to an open position or back to a closed position, **characterized in that** the mould cavity, as seen in the transverse direction (CD) of the mould (40; 40'), describes a substantially rectilinear, horizontal upper contour and two opposite gable end contours connected to the upper contour at acute angles.

7. The mould according to claim 6, **characterized in that** the mould (40; 40') comprises a removable curing plate (47; 47') adapted to be placed on top of the bottom part (41; 41').

8. The mould according to any one of the claims 6 and 7, **characterized in that** the bottom part (41'), on its upper side, has a plurality of spaced apart protrusions (48', 49') which substantially bridge the space between the bottom part (41') and the cover parts (42', 43'), and that the curing plate (47') is designed with a number of through-going apertures (53', 54'), wherein the protrusions and the apertures are designed such that the protrusions (48', 49) protrude through the apertures (53', 54') when the curing plate (47') is in the mould (40') and so that the protrusions can slide out through the apertures when the curing plate is removed from the mould.

9. A method of manufacturing concrete elements according to any one of the claims 1-5, wherein the method makes use of a mould comprising bottom and cover parts which, in a closed position, enclose a mould cavity having an opening for concrete filling, and which, in an open position, allow removal of a casted concrete element, wherein at least one cover part is pivotally arranged relative to the bottom part so that the cover part can be pivoted to the side to an open position or back to a closed position, wherein the method comprises the steps of closing the cover parts (42, 43; 42', 43') of the mould (40; 40') against the bottom part (41; 41') of the mould, injecting a concrete composition into the mould via an opening (46; 46'), vibrating the concrete composition in the mould when necessary, causing the concrete composition in the mould to cure at least partially, opening the cover parts (42, 43; 42', 43') of the mould, and removing an at least partially cured concrete element from the mould, **characterized in that** the mould cavity of the mould being used in the method, as seen in the transverse direction (CD) of the mould (40; 40'), describes a substantially rectilinear, horizontal upper contour and two opposite gable end contours connected to the upper contour at acute angles, and that the method further comprises the step of arranging longitudinal reinforcement elements to bridge the mould cavity between the opposite gable ends of the mould, in a step before the concrete composition is caused to cure, and the step of applying at least one connecting member, for interconnection with a corresponding connecting member of another concrete element, on the concrete element by partial embedding into the concrete composition before curing, or fixing at least one connecting member, for interconnection with a corresponding connecting member of another concrete element, to the concrete element after the curing.

10. The method according to claim 9, **characterized in that** the method further comprises to place a removable curing plate (47; 47') on the bottom part of the mould before the cover parts are closed, and to lift out the curing plate and an overlying, at least partially cured concrete element from the mould after the cover parts have been opened.

11. An arrangement for laying concrete elements from a ship, **characterized in that** the arrangement (59) comprises concrete elements according to any one of the claims 1-5 and at least one tool (55) for interconnecting the concrete elements before the laying operation, said concrete elements being designed such that the projection of the gable ends is inclined so that the top side becomes longer than the bottom side and so that a first concrete element (1') exhibits a first connecting member (19') for interconnection with a second connecting member (18") of a second concrete element (1") and said connecting members (19', 18") are designed to provide a distance between the gable ends of the two concrete elements (1', 1"), after the interconnection, which is smaller than 30 centimetres, wherein said tool (55) comprises positioning means for bringing the first connecting member (19') substantially flush to and next to the second connecting member (18") in the correct position for interconnection by means of at least one connecting element (21), and wherein said connecting tool has an output end for interconnected concrete elements and the output end is connected to a laying device (60) for the interconnected concrete elements.

12. The arrangement according to claim 11, **characterized in that** the laying device (60) comprises a conveyor belt which transports the interconnected concrete elements further on from the tool (55) in a direction towards a laying element (61) outside the railing of the ship.

13. The arrangement according to claim 12, **characterized in that** the laying element consists of a guiding means (63; 63'; 63"; 63"') hinged from the railing of the ship after the output end of the conveyor belt, wherein the guiding means has at least one passage (64) through which the interconnected concrete elements pass while being laid into the water.

14. The arrangement according to claim 13, **characterized in that** the guiding means (63") is arranged at the outer end of an arm (65"), having a fixed length, which is hinged from the railing of the ship, wherein the arm has at least one passage (64") through which the interconnected concrete elements pass on their way to the guiding means (63").

15. The arrangement according to claim 13, **characterized in that** the guiding means (63"') is arranged at the outer end of a telescopic arm (65"'), having an adjustable length, which is hinged from the railing of the ship, wherein the arm has at least one passage (64"') through which the interconnected concrete elements pass on their way to the guiding means.

16. A method for laying concrete elements according to any one of the claims 1-5 from a ship, **characterized in that** the method comprises to interconnect concrete elements, which are designed such that the projection of the gable ends is inclined so that the top side becomes longer than the bottom side and so that a first concrete element (1') exhibits a first connecting member (19') for interconnection with a second connecting member (18") of a second concrete element (1") and wherein said connecting members (19', 18") are designed to provide a distance between the gable ends of said concrete elements (1', 1") after the interconnection which is smaller than 30 centimetres, and **in that** the method further comprises to lay a row of the interconnected concrete elements with a radius of curvature, for downward deflection of the row, which is smaller than 25 metres, in order to form a protective structure over an underwater installation after the laying of said row onto a bottom surface.

17. The method according to claim 16, **characterized in that** the underwater installation is a cable or pipeline, which is laid together with the interconnected concrete elements, while being suspended underneath the row of concrete elements during the laying operation.

## Patentansprüche

1. Betonelement zum Schutz einer Unterwasseranlage, wobei das Betonelement (1; 1', 1") als ein längliches, gekrümmtes Hüllensegment geformt ist, welches zwei Giebelenden (2, 3), eine Unterseite (4) zwischen den Giebelenden, welche mit einer longitudinalen Kavität (5) zum Aufnehmen der Unterwasseranlage ausgebildet ist, wenn das Betonelement verlegt wird, eine Oberseite (6) zwischen den Giebelenden und wenigstens zwei durchgehende Öffnungen (7, 8) von der Oberseite (6) zu der Kavität (5) aufweist,
**dadurch gekennzeichnet, dass** die Projektion der Giebelenden (2, 3) geneigt ist, so dass die Oberseite (6) länger als die Unterseite (4) wird, wobei das Betonelement (1) mit wenigstens einem Verbindungselement (18, 19) zum Verbinden mit einem entsprechenden Verbindungselement (18') eines anderen Betonelements (1') bereitgestellt ist und wobei die Verbindungselemente (19, 18') derart ausgebildet sind, dass der Abstand zwischen den Außenrändern der Giebelenden von zwei verbundenen Betonelementen (1, 1') kleiner als 30 cm nach dem Verlegebetrieb wird, wobei die Oberseite (6) in der Höhe von der Mitte zu den Seiten (16, 17) abnimmt und eine glatte Kurvenform beschreibt oder/und dass die Oberseite abgeschrägte Ränder an dem Übergang zu den Giebelenden derart aufweist, dass ein geringer Reibungswiderstand gegen ein über das Element gezogenes Schleppnetz nach dem Verlegebetrieb erhalten wird.

2. Betonelement nach Anspruch 1,
**dadurch gekennzeichnet, dass** das Betonelement (1) angeschrägte und vorzugsweise abgerundete Ecken (9, 10) an dem Übergang zwischen der Unterseite (4) und wenigstens einem der Giebelenden (2, 3) aufweist.

3. Betonelement nach Anspruch 1 oder 2,
**dadurch gekennzeichnet, dass** die Unterseite (4) mit longitudinalen Trageläufern (11, 12) an den Seiten der Kavität (5) ausgebildet ist, und dass die Trageläufer eine konkave Außenkontur (13) in der longitudinalen Richtung des Betonelements aufweisen.

4. Betonelement nach einem der vorhergehenden Ansprüche,
**dadurch gekennzeichnet, dass** das Betonelement (1) Verbindungselemente (18, 19) an beiden Giebelenden aufweist.

5. Betonelement nach einem der vorhergehenden Ansprüche,
**dadurch gekennzeichnet, dass** das Betonelement (1, 1') und die Verbindungselemente (19, 18') eine Gestalt aufweisen, welche ein Verlegen einer Reihe von verbundenen Betonelementen mit einem Krümmungsradius, welcher kleiner als 25 m ist, für ein abwärtiges Durchbiegen der Reihe ermöglicht.

6. Form zum Herstellen von Betonelementen nach einem der Ansprüche 1-5, wobei die Form (40; 40') Boden- und Abdeckteile (41, 42, 43; 41', 42', 43') umfasst, welche in einer geschlossenen Position eine Formkavität umschließen, welche eine Öffnung zum Einfüllen von Beton aufweisen und welche in einer geöffneten Position eine Entnahme von geformten Betonelementen gestatten, und wobei wenigstens ein Abdeckteil (42, 43; 42', 43') relativ zu dem Bodenteil (41; 41') schwenkbar angeordnet ist, so dass der Abdeckteil zu der Seite in eine geöffnete Position oder zurück in eine geschlossene Position geschwenkt werden kann,
**dadurch gekennzeichnet, dass** die Formkavität bei Betrachtung in der transversalen Richtung (CD) der Form (40; 40') eine im Wesentlichen rechtwinklige, horizontale obere Kontur und zwei gegenüberliegende Giebelendenkonturen beschreibt, welche mit der oberen Kontur unter spitzen Winkeln verbunden sind.

7. Form nach Anspruch 6,
**dadurch gekennzeichnet, dass** die Form (40; 40') eine abnehmbare Aushärtungsplatte (47; 47') umfasst, welche dazu eingerichtet ist, auf den Bodenteil (41; 41') gesetzt zu werden.

8. Form nach einem der Ansprüche 6 und 7,
**dadurch gekennzeichnet, dass** der Bodenteil (41') an seiner Oberseite eine Mehrzahl von beabstandeten Vorsprüngen (48', 49') aufweist, welche im Wesentlichen den Raum zwischen dem Bodenteil (41') und den Abdeckteilen (42', 43') überbrücken, und dass die Aushärtungsplatte (47') mit einer Anzahl von durchgehenden Öffnungen (53', 54') ausgebildet ist, wobei die Vorsprünge und die Öffnungen derart ausgebildet sind, dass die Vorsprünge (48', 49) durch die Öffnungen (53', 54') vorstehen, wenn sich die Aushärtungsplatte (47') in der Form (40') befindet, und so dass die Vorsprünge aus den Öffnungen gleiten können, wenn die Aushärtungsplatte von der Form entfernt wird.

9. Verfahren zum Herstellen von Betonelementen nach einem der Ansprüche 1 bis 5, wobei das Verfahren eine Form verwendet, umfassend Boden- und Abdeckteile, welche in einer geschlossenen Position eine Formkavität, welche eine Öffnung zum Einfüllen von Beton aufweist, umschließen und welche in einer geöffneten Position ein Entfernen eines geformten Betonelements gestatten, wobei wenigstens ein Abdeckteil schwenkbar relativ zu dem Bodenteil angeordnet ist, so dass der Abdeckteil zu der Seite in eine geöffnete Position oder zurück in eine geschlossene Position geschwenkt werden kann, wobei das Verfahren die Schritte umfasst: Schließen der Abdeckteile (42, 43; 42', 43') der Form (40; 40') gegen den Bodenteil (41; 41') der Form, Einspritzen einer Betonzusammensetzung in die Form über eine Öffnung (46; 46'), Vibrieren der Betonzusammensetzung in der Form, falls erforderlich, Bewirken, dass die Betonzusammensetzung in der Form wenigstens teilweise aushärtet, Öffnen der Abdeckteile (42, 43; 42', 43') der Form, und Entfernen eines wenigstens teilweise ausgehärteten Betonelements aus der Form,
**dadurch gekennzeichnet, dass** die Formkavität der in dem Verfahren verwendeten Form bei Betrachtung in der transversalen Richtung (CD) der Form (40; 40') eine im Wesentlichen rechtwinklige, horizontale obere Kontur und zwei gegenüberliegende Giebelendenkonturen beschreibt, welche mit der oberen Kontur unter spitzen Winkeln verbunden sind, und dass das Verfahren ferner umfasst: den Schritt eines Anordnens longitudinaler Verstärkungselemente, um die Formkavität zwischen den gegenüberliegenden Giebelenden der Form in einem Schritt bevor bewirkt wird, dass die Betonzusammensetzung aushärtet, zu überbrücken, und den Schritt eines Anbringens wenigstens eines Verbindungselements zum Verbinden mit einem entsprechenden Verbindungselement eines anderen Betonelements an das Betonelement durch teilweises Einbetten in die Betonzusammensetzung vor dem Aushärten oder eines Befestigens wenigstens eines Verbindungselements zum Verbinden mit einem entsprechenden Verbindungselement eines anderen Betonelements an das Betonelement nach dem Aushärten.

10. Verfahren nach Anspruch 9,
**dadurch gekennzeichnet, dass** das Verfahren ferner umfasst: ein Anordnen einer entfernbaren Aushärtungsplatte (47; 47') an dem Bodenteil der Form, bevor die Abdeckteile geschlossen werden und ein Herausheben der Aushärtungsplatte und eines aufliegenden, wenigstens teilweise ausgehärteten Betonelements aus der Form, nachdem die Abdeckteile geöffnet worden sind.

11. Anordnung zum Verlegen von Betonelementen von einem Schiff, **dadurch gekennzeichnet, dass** die Anordnung (59) Betonelemente nach einem der Ansprüche 1-5 und wenigstens ein Werkzeug (55) zum Verbinden der Betonelemente vor dem Verlegebetrieb umfasst, wobei die Betonelemente derart ausgebildet sind, dass die Projektion der Giebelenden geneigt ist, so dass die Oberseite länger als die Unterseite wird, und so dass ein erstes Betonelement (1') ein erstes Verbindungselement (19') zum Verbinden mit einem zweiten Verbindungselement (18") eines zweiten Betonelements (1") aufweist, und wobei die Verbindungselemente (19', 18") ausgebildet sind, um einen Abstand zwischen den Giebelenden der beiden Betonelemente (1', 1") nach dem Verbinden bereitzustellen, welcher kleiner als 30 cm ist, wobei das Werkzeug (55) Positionierungsmittel umfasst, um das erste Verbindungselement (19') im Wesentlichen bündig mit und neben dem zweiten Verbindungselement (18") in die korrekte Position für eine Verbindung mittels wenigstens eines Verbindungselements (21) zu bringen, und wobei das Verbindungswerkzeug ein Ausgabeende für verbundene Betonelemente aufweist und wobei das Ausgabeende mit einer Verlegevorrichtung (60) für die verbundenen Betonelemente verbunden ist.

12. Anordnung nach Anspruch 11,
**dadurch gekennzeichnet, dass** die Verlegevorrichtung (60) ein Förderband umfasst, welches die verbundenen Betonelemente von dem Werkzeug (55) weiter in eine Richtung zu einem Verlegeelement (61) außerhalb der Schiffsreling transportiert.

13. Anordnung nach Anspruch 12,
**dadurch gekennzeichnet, dass** das Verlegeelement aus Führungsmitteln (63; 63'; 63"; 63"') besteht, welche von der Schiffsreling hinter dem Ausgabeende des Förderbands angelenkt sind, wobei die Führungsmittel wenigstens einen Durchgang (64) aufweisen, durch welchen die verbundenen Betonelemente hindurchgehen, während sie ins Wasser verlegt werden.

14. Anordnung nach Anspruch 13,
**dadurch gekennzeichnet, dass** die Führungsmittel (63") an dem äußeren Ende eines eine feste Länge aufweisenden Arms (65") angeordnet sind, welcher von der Schiffsreling angelenkt ist, wobei der Arm wenigstens einen Durchgang (64") aufweist, durch welchen die verbundenen Betonelemente auf ihrem Weg zu den Führungsmitteln (63") hindurchgehen.

15. Anordnung nach Anspruch 13,
**dadurch gekennzeichnet, dass** die Führungsmittel (63"') an dem äußeren Ende eines eine einstellbare Länge aufweisenden Teleskoparms (65"') angeordnet sind, welcher von der Schiffsreling angelenkt ist, wobei der Arm wenigstens einen Durchgang (64"') aufweist, durch welchen die verbundenen Betonelemente auf ihrem Weg zu den Führungsmitteln hindurchgehen.

16. Verfahren zum Verlegen von Betonelementen nach einem der Ansprüche 1-5 von einem Schiff,
**dadurch gekennzeichnet, dass** das Verfahren ein Verbinden von Betonelementen umfasst, welche derart ausgebildet sind, dass die Projektion der Giebelenden geneigt ist, so dass die Oberseite länger als die Unterseite wird, und so dass ein erstes Betonelement (1') ein erstes Verbindungselement (19') zum Verbinden mit einem zweiten Verbindungselement (18") eines zweiten Betonelements (1") aufweist, und wobei die Verbindungselemente (19', 18") ausgebildet sind, um einen Abstand zwischen den Giebelenden der Betonelemente (1', 1") nach dem Verbinden bereitzustellen, welcher kleiner als 30 cm ist, und dass das Verfahren ferner ein Verlegen einer Reihe der verbundenen Betonelemente mit einem Krümmungsradius für ein abwärtiges Durchbiegen der Reihe umfasst, welcher kleiner als 25 m ist, um eine Schutzstruktur über einer Unterwasseranlage nach dem Verlegen der Reihe auf eine Bodenfläche zu bilden.

17. Verfahren nach Anspruch 16,
**dadurch gekennzeichnet, dass** die Unterwasseranlage ein Kabel oder eine Rohrleitung ist, welches/welche zusammen mit den verbundenen Betonelementen verlegt wird, während es/sie unterhalb der Reihe von Betonelementen während des Verlegebetriebs aufgehängt ist.

## Revendications

1. Un élément en béton pour la protection d'une installation sous-marine, ledit élément en béton (1, 1', 1") ayant la forme d'un segment de coque allongé et incurvé ayant deux extrémités en saillie (2, 3), un côté inférieur (4) entre les extrémités qui est conçu avec une cavité longitudinale (5) destinée à recevoir l'installation sous-marine lors de la pose de l'élément en béton, un côté supérieur (6) entre les extrémités, et au moins deux ouvertures traversantes (7, 8) s'étendant depuis le côté supérieur (6) jusqu'à la cavité (5), **caractérisé en ce que** la saillie des extrémités (2, 3) est inclinée de telle sorte que le côté supérieur (6) est plus long que le côté inférieur (4), l'élément en béton (1) étant muni d'au moins un élément de liaison (18, 19) pour une liaison à un élément de liaison correspondant (18') d'un autre élément en béton (1') et lesdits organes de liaison (19, 18') sont d'une conception telle que la distance entre les bords extérieurs des extrémités en saillie de deux éléments en béton reliés entre eux (1, 1') devient inférieure à 30 centimètres après l'opération de pose, le côté supérieur (6) diminuant de hauteur à partir depuis le centre vers les côtés (16, 17) et présentant une forme courbe lisse, et / ou le côté supérieur ayant des bords biseautés au niveau de la transition allant vers les extrémités en saillie, de telle sorte qu'une faible résistance à la friction avec un chalut traîné sur l'élément après l'opération de pose est obtenue.

2. L'élément en béton selon la revendication 1, **caractérisé en ce que** l'élément en béton (1) présente des coins (9, 10) biseautés et de préférence arrondis au niveau de la transition entre le côté inférieur (4) et au moins l'une des extrémités (2, 3) en saillie.

3. L'élément en béton selon la revendication 1 ou la revendication 2, **caractérisé en ce que** le côté inférieur (4) est conçu avec des patins de support longitudinaux (11, 12) sur les côtés de la cavité (5), et **en ce que** les patins de support présentent un contour extérieur concave (13) dans la direction longitudinale de l'élément en béton.

4. L'élément en béton selon l'une quelconque des revendications précédentes, **caractérisé en ce que** l'élément en béton (1) comporte des éléments de liaison (18, 19) reliant les deux extrémités en saillie.

5. L'élément en béton selon l'une quelconque des revendications précédentes, **caractérisé en ce que** l'élément en béton (1, 1') et les éléments de liaison (19, 18') sont d'une conception qui permet la pose d'une rangée d'éléments en béton reliés entre eux avec un rayon de courbure, pour permettre une déviation vers le bas de la rangée, qui est inférieur à 25 mètres.

6. Un moule pour la fabrication d'éléments en béton selon l'une quelconque des revendications 1 à 5, dans lequel le moule (40, 40') comprend des parties inférieures et des parties de couvercle (41, 42, 43, 41', 42', 43') qui, dans une position fermée, forment une cavité de moule ayant une ouverture pour le remplissage de béton, et qui, dans une position ouverte, permettent le retrait d'un élément de béton moulé, et dans lequel au moins une partie formant couvercle (42, 43, 42', 43') est agencée de manière pivotante par rapport à la partie inférieure (41, 41') de telle sorte que la partie formant couvercle peut être pivotée vers le côté dans une position ouverte ou être ramenée dans une position fermée, **caractérisé en ce que** la cavité du moule, vue dans une direction transversale (CD) du moule (40, 40'), présente un profil supérieur sensiblement rectiligne et horizontal, et deux profils d'extrémités en saillie opposés reliés au profil supérieur par des angles aigus.

7. Le moule selon la revendication 6, **caractérisé en ce que** le moule (40, 40') comprend une plaque de durcissement amovible (47, 47') adaptée pour être placée sur le dessus de la partie inférieure (41, 41').

8. Le moule selon l'une quelconque des revendications 6 ou 7, **caractérisé en ce que** la partie inférieure (41'), sur sa face supérieure, présente une pluralité de saillies espacées (48', 49') qui traversent sensiblement l'espace allant de la partie de fond (41') aux parties formant couvercle (42', 43'), et **en ce que** la plaque de durcissement (47) est conçue avec un certain nombre d'orifices traversants (53', 54'), les saillies et les ouvertures étant conçues de telle sorte que les saillies (48', 49) font saillie à travers les orifices (53', 54') lorsque la plaque de durcissement (47) se trouve dans le moule (40') et de telle sorte que les saillies peuvent coulisser à travers les orifices lorsque la plaque de durcissement est retirée du moule.

9. Un procédé de fabrication d'éléments en béton selon l'une quelconque des revendications 1 à 5, dans lequel le procédé utilise un moule comprenant des parties inférieures et des parties formant couvercle qui, en position fermée, définissent une cavité du moule ayant une ouverture pour remplissage de béton, et qui, en position ouverte, permettent le retrait d'un élément de béton moulé, dans lequel au moins une partie formant couvercle est agencée de façon pivotante par rapport à la partie inférieure de telle sorte que la partie formant couvercle peut être pivotée vers le côté en position ouverte ou être ramenée en position fermée, le procédé comprenant les étapes consistant à fermer les parties formant couvercle (42, 43, 42', 43') du moule (40, 40') contre la partie inférieure (41, 41') du moule, à injecter une composition de béton dans le moule par une ouverture (46, 46'), à vibrer la composition de béton dans le moule, si nécessaire, et à amener le la composition de béton à durcir dans le moule au moins partiellement, à ouvrir les parties formant couvercle (42, 43, 42', 43') du moule, et à retirer du moule un élément en béton au moins partiellement durci, **caractérisé en ce que** la cavité de moulage du moule utilisée dans le procédé, vue dans une direction transversale (CD) du moule (40, 40'), présente un profil supérieur sensiblement rectiligne et horizontal, et deux profils d'extrémités en saillie opposés reliés au profil supérieur par des angles aigus, le procédé comprenant en outre l'étape consistant, au cours d'une étape intervenant avant que la composition de béton soit amenée à durcir, à agencer des éléments de renforcement longitudinaux tels qu'ils traversent la cavité du moule entre les extrémités en saillie opposées du moule, et l'étape consistant à appliquer au moins un élément de liaison, destiné à une interconnexion avec un élément de liaison correspondant d'un autre élément en béton, sur l'élément en béton, par noyage partiel dans la composition de béton avant le durcissement, ou par fixation d'au moins un élément de liaison, destiné à une interconnexion avec un élément de liaison correspondant d'un autre élément en béton, à l'élément de béton après le durcissement.

10. Le procédé selon la revendication 9, **caractérisé en ce que** le procédé comprend en outre le fait de placer une plaque de durcissement (47, 47') amovible sur la partie inférieure du moule avant que les parties formant couvercle soient fermées, et de sortir la plaque de durcissement et un élément en béton, au moins partiellement durci, la recouvrant, hors du moule après que les parties formant couvercle aient été ouvertes.

11. Un dispositif pour la pose d'éléments en béton depuis un navire, **caractérisé en ce que** le dispositif (59) comprend des éléments en béton selon l'une quelconque des revendications 1 à 5 et au moins un outil (55) pour relier entre eux les éléments en béton avant l'opération de pose, lesdits éléments en béton étant conçus de telle sorte que la saillie des extrémités est inclinée de telle sorte que le côté supérieur est plus long que le côté inférieur et de telle sorte qu'un premier élément en béton (1') présente un premier élément de liaison (19') pour une interconnexion avec un deuxième élément de liaison (18") d'un deuxième élément en béton (1"), et lesdits éléments de liaison (19', 18") sont conçus pour définir une distance entre les extrémités des deux éléments en béton (1', 1"), après l'interconnexion, qui est inférieure à 30 centimètres, ledit outil (55) comprenant des moyens de positionnement pour amener le premier élément de liaison (19') sensiblement en affleurement avec le deuxième élément de liaison (18") et à côté de ce dernier, dans la position correcte pour l'interconnexion au moyen d'au moins un élément de liaison (21), et ledit outil de connexion comportant une extrémité de sortie pour les éléments en béton reliés entre eux, l'extrémité de sortie étant reliée à un dispositif de pose (60) pour poser les éléments en béton reliés entre eux.

12. Le dispositif selon la revendication 11, **caractérisé en ce que** le dispositif de pose (60) comprend une bande transporteuse qui transporte les éléments en béton reliés entre eux depuis l'outil (55) dans une direction allant vers un élément de pose (61) à l'extérieur de la rampe du navire.

13. Le dispositif selon la revendication 12, **caractérisé en ce que** le dispositif de pose comprend un moyen de guidage (63, 63', 63", 63"') articulé à partir de la rampe du navire après l'extrémité de sortie de la bande transporteuse, le moyen de guidage comportant au moins un passage (64) à travers lequel les éléments en béton reliés entre eux passent lorsqu'ils sont mis à l'eau.

14. Le dispositif selon la revendication 13, **caractérisé en ce que** le moyen de guidage (63") est disposé à l'extrémité extérieure d'un bras (65") ayant une longueur fixe, qui est articulé à partir de la rampe du navire, lequel bras comprend au moins un passage (64") à travers lequel les éléments en béton reliés entre eux passent au cours de leur trajet vers les moyens de guidage (63").

15. Le dispositif selon la revendication 13, **caractérisé en ce que** le moyen de guidage (63"') est agencé à l'extrémité extérieure d'un bras télescopique (65"') ayant une longueur ajustable, qui est articulé à partir de la rampe du navire, le bras comportant au moins un passage (64"') à travers lequel les éléments en béton reliés entre eux passent au cours de leur trajet vers les moyens de guidage.

16. Un procédé pour la pose d'éléments en béton selon l'une quelconque des revendications 1-5 à partir d'un navire, **caractérisé en ce que** le procédé comprend la liaison d'éléments en béton les uns aux autres, qui sont conçus de telle sorte que la saillie des extrémités en saillie est inclinée de telle sorte que le côté supérieur devienne plus long que le côté inférieur et de telle sorte qu'un premier élément en béton (1') présente un premier élément de liaison (19') pour une interconnexion avec un deuxième élément de liaison (18") d'un deuxième élément en béton (1"), lesdits éléments de liaison (19', 18") étant conçus pour définir une distance entre les extrémités desdits éléments en béton (1', 1 "), après l'interconnexion qui est inférieure à 30 centimètres, et **en ce que** le procédé comprend en outre le fait de poser une rangée d'éléments en béton reliés entre eux avec un rayon de courbure, pour une déviation vers le bas de la rangée, qui est inférieur à 25 mètres, de manière à former une structure de protection au dessus d'une installation sous-marine, après la pose de ladite rangée sur une surface de fond.

17. Le procédé selon la revendication 16, **caractérisé en ce que** l'installation sous-marine est un câble ou une canalisation, qui est posé en même temps que les éléments en béton reliés entre eux, tout en étant suspendu au-dessous de la rangée d'éléments en béton au cours de l'opération de pose.
